# EUROPEAN PATENT APPLICATION

(11) **EP 0 591 753 A2**
(43) Date of publication of application: **13.04.1994**
(21) Application number: 93115196.3
(22) Date of filing: 21.09.1993
(51) Int. Cl.: G06F 11/00

(54) **A data processor and a debugging apparatus using it**

(30) Priority: 22.09.1992 JP 277803/92
(71) Applicant: HITACHI, LTD., Chiyoda-ku, Tokyo 100 (JP)
(72) Inventor: Yoshioka, Shinichi, Kodaira-shi, Tokyo (JP); Kondo, Yoshiyuki, Gotenba-shi, Shizuoka (JP); Takagi, Katsuaki, Kawagoe-shi, Saitama (JP)
(74) Representative: Strehl Schübel-Hopf Groening & Partner

(57) **Abstract**

The data processor ***1*** has a mode in which instructions are executed one module at a time, the module being a subroutine of high-level language, and a break is activated immediately after executing a return instruction at the end of the module. This mode is set in the control register (MSCNT) by an emulator. In this mode, a return address, the address to which the processing returns from the subroutine, is saved in the return address hold register (RAH) by using a return address which is stacked at a time of executing a branch instruction. The return address saved in the return address hold register (RAH) is compared by the comparator circuit ***52*** with the return address which is popped up from the stack into the instruction pointer (IP) at the execution of the return instruction at the end of the subroutine. When they agree, a break is activated.

## Description

### BACKGROUND OF THE INVENTION

The present invention relates to a symbolic debugger function for data processing devices that perform programming by using high-level languages such as C language, and more particularly to a technique to implement a function for effecting a break for each module with built-in hardware of the data processing device.

A source program described in a high-level language is compiled into codes (assembly codes) written in an assembly language and then converted into an object program by an assembler. The object program thus obtained in a machine language is executed by the data processor. Such software that has been programmed by using a high-level language is debugged without directly focusing on the assembly code for ease of debugging. Such a debugging method is called a symbolic debugging.

A further explanation is made of the symbolic debugging. For a central processing unit to execute instructions requires absolute addresses. In the debugging stage, the absolute addresses are modified as a result of series of translation processes (such as compiling and assembling) and usually do not remain constant. Hence, specifying the starting and stopping conditions of emulation with absolute addresses will make a very large burden. On the contrary, reference names (symbols) assigned, during programming, to branch destinations, data or modules are usually not modified throughout the entire debugging stages, with only the corresponding absolute addresses changed. Therefore, if emulations can be executed using reference names, the debugging will be released from the burden of having to memorize the absolute addresses and become easy. The debugging method using the reference names is a symbolic debugging. Performing emulation by this symbolic debugging involves the use of an address correspondence table called a symbol table. This table represents correspondence between the reference names and statement numbers used in the program and the corresponding relative addresses. During the process of emulation, when a symbol name is specified as the stop condition of the emulation, software controlling the emulation searches through the correspondence table for the corresponding relative address and calculates its absolute address. For example, this symbol table is automatically generated during the translation process when a certain instruction is specified as a compiler control operator. The symbol table is mapped in memory in the emulator by software designed to control the emulation.

In performing such symbolic debugging, a break for each statement in the program in high-level language is realized by executing steps on the high-level language description one by one. Normally, the program is debugged one module (a function unit in high-level language) at a time. In debugging a main program, modules such as subroutines, which are invoked in the main program, have often been debugged already. Hence, debugging the main program does not require performing step-by-step execution through modules like subroutines, which are called in the main program, but there is a need to step-execute the module as one unit.

In this case, it is necessary to activate a break immediately after executing a return instruction located at the end of the module so that the module can be step-executed as one unit. A break is set in this way because there is a possibility that the first instruction that is executed after the return may update a value returned from the module. A procedure whereby a module like a subroutine is executed as one unit and a break is set immediately after executing the return instruction at the end of the module is called a module-through break. There is, however, a problem that normally the address of a return instruction at the end of a module is not known at a time when the module is called by a branch instruction or a call instruction. This problem has been solved by the conventional technique described below to realize the module-through break. A first technique involves replacing the first instruction invoked after the return from the module with a debug instruction and activating a software break. A second technique, disclosed in Japanese Patent Laid-Open No. 180344/1986, consists in analyzing by software in the emulator a stack which is generated on memory when the data processor calls a module, determining the return address at the end of the module, and activating a break by using the return address as a break point.

### SUMMARY OF THE INVENTION

The technique which replaces the first instruction executed after the return from the module with a debug instruction, however, cannot be applied to systems in which a user program is on the ROM, and makes it necessary to perform step-by-step execution through even modules that are already debugged. In the second technique which analyzes by the emulator's software the stack that the data processing device generates on memory when calling a module, a dedicated analysis software is needed, making the processing complex and requiring a longer time for processing. In addition, this second technique cannot deal with situations where a first module called by the main program calls a second module.

An object of this invention is to realize a module-through break in the symbolic debugger with hardware built into the data processor without embedding debug instructions in the user program and without burdening the emulation software. Where a module that is to be given a module-through break calls another module, it is another object of this invention to realize a module-through break similar to the one in the first object with the built-in hardware of the data processor by treating these modules as one module.

These and other objects and novel features of this invention will become apparent from the following description and accompanying drawings in this specification.

Representative aspects of this invention may be outlined as follows.

The data processor according to this invention has a module-through break mode whereby, during the execution one module at a time of instructions written in high-level language, a break is activated immediately after executing the return instruction at the end of the module (such as a subroutine), and also a means such as a module-through break enable bit (MSBE) which selectively specifies from outside whether the mode is valid or invalid. To describe in more detail, in the module-through break mode, a module call instruction registers a return address to which to return from the module in a memory means such as a return address hold register (RAH) in the data processor. Upon execution of an instruction which requests the return from the module, the contents of the return address hold register (RAH) are compared with the return address and, when they agree, a module break exception is produced.

Also in cases where a module that has been called from the main program calls another module, a module-through break is realized for the entire first-called module taken as one unit by providing, in addition to the memory means such as the return address hold register (RAH), a control bit such as a module-through break valid bit (MSBV), which is initialized, in response to the specification of the module-through break mode, to a first state for allowing the memory means to be written over and which is set to a second state when information is written into the memory means.

The control bit and the means for selectively specifying from outside the validity of the module-through break mode can be formed by a module-through break control register (MSCNT) whose state can be set from outside.

The debugging apparatus like an emulator, which uses such a data processor and supports the symbolic debugging based on high-level language, has a memory area for storing symbolic debug firmware that makes an initial setting for the control register (MSCNT) in response to the module-through break request.

With the above means, the data processor that supports the module-through break registers in an area different from the stack a return-from-the-module address or return address that is stacked when executing a call instruction for the desired module. Upon executing a return-from-the-module instruction or return instruction, the data processor compares the registered return address with the return address popped up from the stack and, if they agree, produces a module break exception. As a result, the data processor activates through its own hardware a break immediately after executing the return instruction at the end of the called module. This realizes the module-through break as the symbolic debug function using high-level language without embedding debug instructions in the user program and without burdening the emulation software (symbolic debugger firmware).

Provision of the module-through break valid bit (MSBV), which specifies whether to allow or inhibit the registration of new data to the return address hold register (RAH), causes the address to which the control returns from the called subroutine to be registered in the return address hold register (RAH) and be kept there until the instruction requesting a return from the subroutine is executed. The module-through break valid bit (MSBV) also ensures that, even in cases where the module called from the main program calls another module, the module-through break is realized for the entire first-called module as one unit.

### BRIEF DESCRIPTION OF THE DRAWINGS

Figure 1 is a block diagram showing the configuration of the microprocessor as one embodiment of this invention;
Figure 2 is an explanatory diagram showing the return address hold register (RAH) and the module-through break control register (MSCNT);
Figure 3 is an example flowchart showing a series of data processing steps carried out to execute the module-through break;
Figure 4 is an explanatory diagram showing the high-level language description and the corresponding assembly language description when a module with the module-through break calls another module;
Figure 5 is an example flowchart showing a series of processing steps carried out by the emulator when the microprocessor of this invention supports the module-through break with its own hardware;
Figure 6 is an example flowchart showing a series of processing steps carried out by the emulator in a conventional method whereby the stack on memory is analyzed at a time of calling a module to determine the return address at the end of the module and the return address is used as a break point to realize the module-through break;
Figure 7 is a block diagram showing the emulator as one embodiment of this invention; and
Figure 8 is an explanatory diagram showing representative debug commands.

### BRIEF DESCRIPTION OF THE PREFERRED EMBODIMENTS

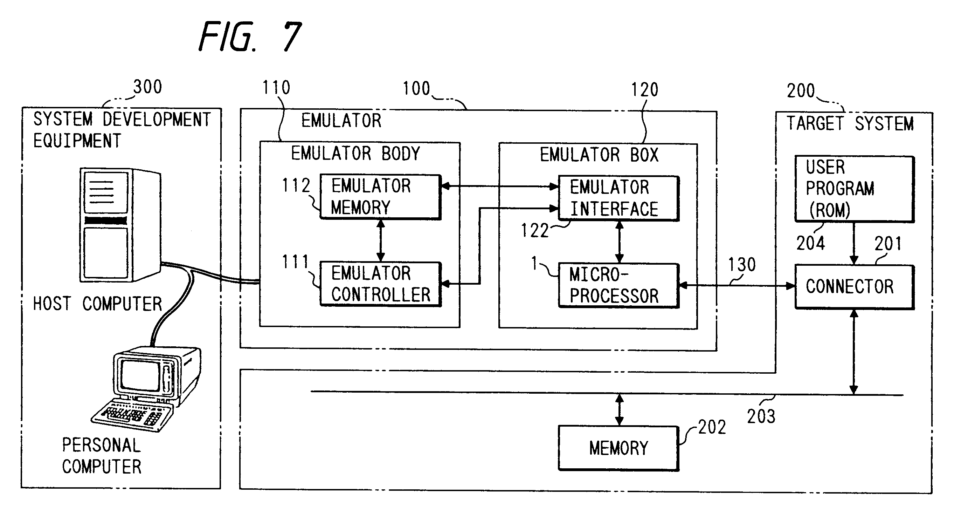

Figure 7 is a block diagram showing the overall configuration of an emulation system using a microprocessor as one embodiment of this invention.

The emulator ***100*** includes an emulator body ***110*** and an emulator box ***120***, and the microprocessor ***1*** mounted on the emulator box ***120*** is connected through an interface cable ***130*** to a microprocessor-mounted connector ***201*** of the target system ***200***. The target system ***200*** is a microprocessor-based system to be software-debugged or system-debugged. The microprocessor ***1*** mounted on the emulator ***100*** is equivalent to or the same microprocessor that is mounted on the connector ***201*** in the target system ***200***. This microprocessor ***1*** may be an evaluation-dedicated processor for the microprocessor mounted on the connector ***201*** in the target system ***200***. This embodiment uses the same microprocessors utilizing the same chip. That is, the microprocessor ***1*** has a debug support function described later. In the figure, denoted ***202*** is a memory, which is connected with a bus ***203***. The bus ***203*** is also connected to the microprocessor ***1*** through the connector ***200***. A user program (ROM) ***204*** may be a mask ROM or an electrically programmable EPROM or EEPROM. The user program (ROM) ***204*** stores in the system debug area a target program (macro-instructions to be executed by the microprocessor ***1***) that is used for software debugging. In performing the software debugging, the target program is stored in an emulator memory ***112*** and the storage area in the emulator memory ***112*** works as the user program ROM ***204***.

In the system of Figure 7, the microprocessor ***1*** executes the target program to control the target system ***200*** on behalf of the microprocessor in the target system. In the course of substitute execution of control, various bus information and control signals such as addresses and data transferred between the emulator ***100*** and the target system ***200*** are given to the emulator body ***110*** through the emulator interface ***122***. For example, according to the bus cycle of the microprocessor ***1***, the information is traced in a certain memory area such as a trace memory in the emulator memory ***112*** and also fed to a control unit ***111*** of the emulator body ***110*** for use by various emulation controls. In performing emulation, the initial setting or condition setting for the debug support function of the microprocessor ***1*** is made by the control unit ***111*** through the emulator interface ***122***. The emulator body ***110*** is connected to a system development apparatus ***300*** such as a host computer and personal computer. It accepts from the system development apparatus various debug commands, interprets these commands, performs controls for emulation and transfers the traced information to the system development apparatus.

Figure 8 shows representative debug commands. This emulation system has, as debug commands, a normal break command (b command) for activating a break immediately after executing an arbitrary instruction and a module-through break command (bs command) for activating a break immediately after executing the return instruction at the end of the module, which will be described later. Each command includes an address at which to activate a break (i.e. to stop instruction execution by the microprocessor ***1***).

The control program for symbolic debugging (symbolic debugger firmware) is stored in the emulator memory ***112***. The emulator control unit ***111*** accesses the microprocessor ***1*** through the emulator interface ***122*** and performs processing such as setting of the operation mode and of register necessary for the symbolic debugging. The address correspondence table such as the symbol table is also stored in the emulator memory ***112***.

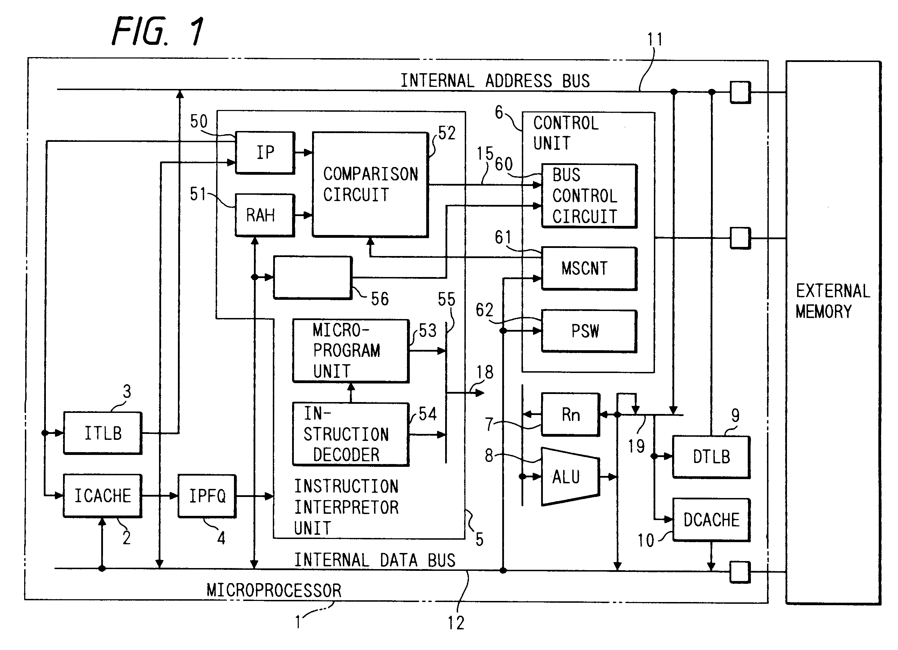

Figure 1 shows the configuration of the microprocessor ***1*** as one embodiment of this invention.

The microprocessor ***1*** includes an instruction cache memory (ICACHE) ***2***, an instruction address conversion buffer (ITLB) ***3***, and an instruction prefetch queue IPFQ ***4***. The address of the instruction to be prefetched is output from an instruction pointer ***50*** contained in an instruction interpreting unit ***5***. The prefetch address output from the instruction pointer ***50*** is fed to the instruction cache memory ***2***. When there is an entry in the instruction cache memory ***2*** corresponding to the address supplied (i.e. in case of a cache hit), the corresponding instruction is fed from the instruction cache memory ***2*** to the instruction prefetch queue ***4***. When the corresponding entry does not exist in the instruction cache memory ***2***, a physical address converted from the supplied address by the instruction address conversion buffer (ITLB) ***3*** is fed to an internal address bus ***11***. This physical address specifies the address in an external memory, initiating a read cycle to fetch the macro-instruction via an internal data bus ***12***. The instruction fetched in this way is passed onto the instruction cache memory ***2*** where it is added as a new entry.

Execution of a call instruction (CALL), which tells the program to branch from the main routine to a subroutine (an instruction calling a subroutine from an arbitrary location in the main routine), requires saving the return address in the stack when transferring the control to the subroutine. Hence, the address to be saved must be an address following the branch instruction. In this embodiment, the instruction prefetch is carried out, and the instruction pointer ***50*** holding the instruction address for the instruction prefetch is pointing at an address several bytes ahead of the instruction being executed. Hence, the pointed address cannot be saved as is as the return address. Whenever the value of the instruction pointer ***50*** needs to be saved, this embodiment, therefore, modifies the value of the instruction pointer ***50*** to the address of an instruction next to the one currently being executed and saves the modified value in the stack. When the control is to be returned from the branched procedure to the main procedure, the saved return address is written into the instruction pointer ***50*** upon executing the return instruction. According to this embodiment, execution of a branch instruction clears the contents of the instruction prefetch queue ***4***. While the configuration of a means for modifying the value of the instruction pointer ***50*** is not shown as it is not directly related to this invention, the value correction may be made easily according to the number of instructions pushed into the instruction prefetch queue as well as the size of the instructions.

The instructions prefetched into the instruction prefetch queue ***4*** are interpreted by an instruction decoder ***54*** contained in an instruction interpreting unit ***5***. The instructions fed to the instruction decoder ***54*** are largely classified into two groups. Instructions in the first group are decoded by the instruction decoder ***54*** which generates control signals necessary for executing the instructions. The control signals thus generated are supplied as internal control signals ***18*** to various parts through a selector ***55***. Instructions in the second group are identified by the instruction decoder ***54***, which gives microprogram unit ***53*** necessary information to generate control signals that are used for executing the instructions. The control signals thus generated are supplied as internal control signals ***18*** to various parts through the selector ***55***.

An execution unit for executing instructions according to the control signals ***18*** includes a general purpose register (Rn) ***7*** and a calculation circuit such as an arithmetic and logic unit (ALU) ***8***. These are interfaced with the internal data bus ***12***. The internal data bus ***12*** is connected with data input/output terminals of a data cache memory (DCACHE) ***10*** which holds data used for calculation. The address input terminal of the data cache memory ***10*** is supplied, through a selector ***19***, with addresses from the internal address bus ***11*** or addresses calculated by the arithmetic and logic unit ***8***. When the data cache memory ***10*** has an entry corresponding to the address supplied through the selector ***19***, the data held in the data cache memory ***10*** is used instead of making an access to the external memory. In the event of a cache miss, the external memory is accessed according to the physical address converted by the data address conversion buffer (DTLB) ***9***. Data thus accessed and written into the internal data bus ***12*** is used for calculation.

The control unit ***6*** includes an interrupt control logic, a control logic for controlling a bus cycle by handshaking with external circuits, a logic for generating various bus access control signals, and various control registers. The control unit ***6*** performs overall controls of the microprocessor ***1*** such as external bus control and control register management. In the figure, the control unit ***6*** is representatively shown to contain a processor status word register (PSW) ***62***, a module-through break control register (MSCNT) ***61***, and a bus control circuit ***60***. The control unit ***6*** outputs a bus access type signal, a read/write signal, a bus start signal and an address strobe signal and takes in a data complete signal and an interrupt signal. The bus access type signal specifies a type of access - instruction access and operand access - with a code of bits.

Next, let us explain about the module-through break that the microprocessor ***1*** of this embodiment supports with its own hardware. The microprocessor ***1*** of this embodiment has debug support functions for software and system debugging using an emulator, among them the module-through break function. The module-through break is the function to execute a module like a subroutine as a unit and activate a break immediately after executing the return instruction at the end of the module. With the module-through break command of Figure 8, the microprocessor ***1*** of this embodiment realizes a break for each module with its own built-in hardware. When the debug support function of the microprocessor ***1*** is used, a debug mode is set in the microprocessor ***1***. The debug mode is specified, for example, by the control register manipulation instruction activating the debug mode specification bit in the processor status word register ***62***. Therefore, with this embodiment the module-through break is made available when the debug mode is effective.

For the module-through break to be realized by hardware of the microprocessor ***1***, the instruction interpreting unit ***5*** includes a return address hold register (RAH) ***51***, which is a 32-bit register, and a comparator circuit ***52***, and the control unit ***6*** includes a module-through break control register (MSCNT) ***61***, which is a 32-bit control register.

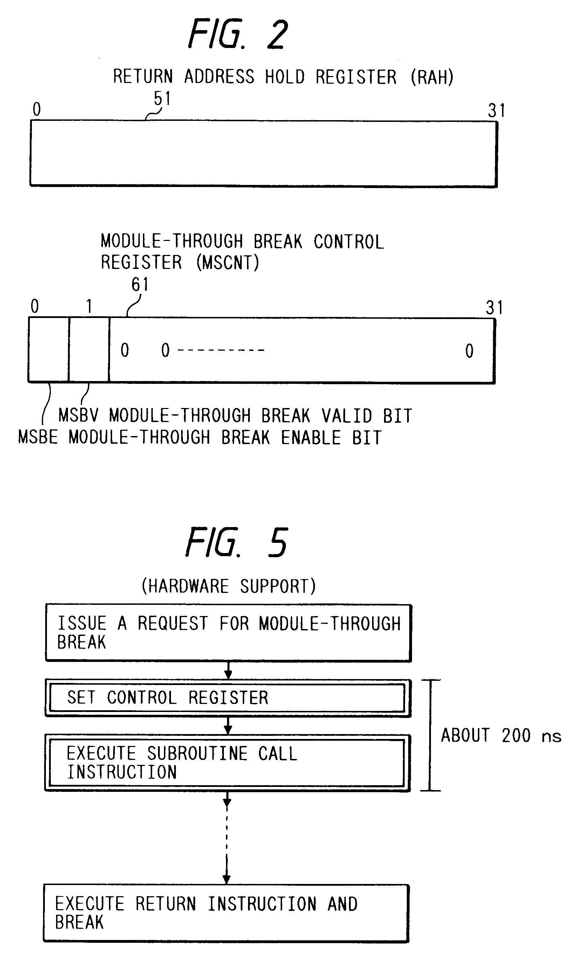

One example of the return address hold register (RAH) ***51*** and the module-through break control register (MSCNT) ***61*** is shown in Figure 2. The return address hold register (RAH) ***51*** is a 32-bit return address hold register. When the value of the instruction pointer ***50*** is to be saved in response to, say, a branch instruction, the address of the instruction pointer ***50*** is modified to the address of a macro-instruction next to the one currently being executed and then saved in the stack. The address (return address) saved in the stack is stored in the return address hold register (RAH) ***51***. The module-through break control register (MSCNT) ***61*** has a module-through break enable bit (MSBE) assigned to the 0-th bit and a module-through break valid bit (MSBV) to the first bit. The setting of the module-through break control register (MSCNT) **61** is done by the control register manipulation instruction contained in the symbolic debugger firmware via the internal data bus ***12***. The module-through break enable bit (MSBE), when it is "1," means that a module-through break mode is enabled and, when it is "0," means it is disabled. The module-through break valid bit (MSBV), when it is "1," means that the data held in the return address hold register (RAH) ***51*** is valid, protecting the return address hold register (RAH) ***51*** against being written over or registered with new data. When it is "0," the module-through break valid bit (MSBV) means that the data held in the return address hold register (RAH) ***51*** is invalid, allowing the return address hold register (RAH) ***51*** to be written over.

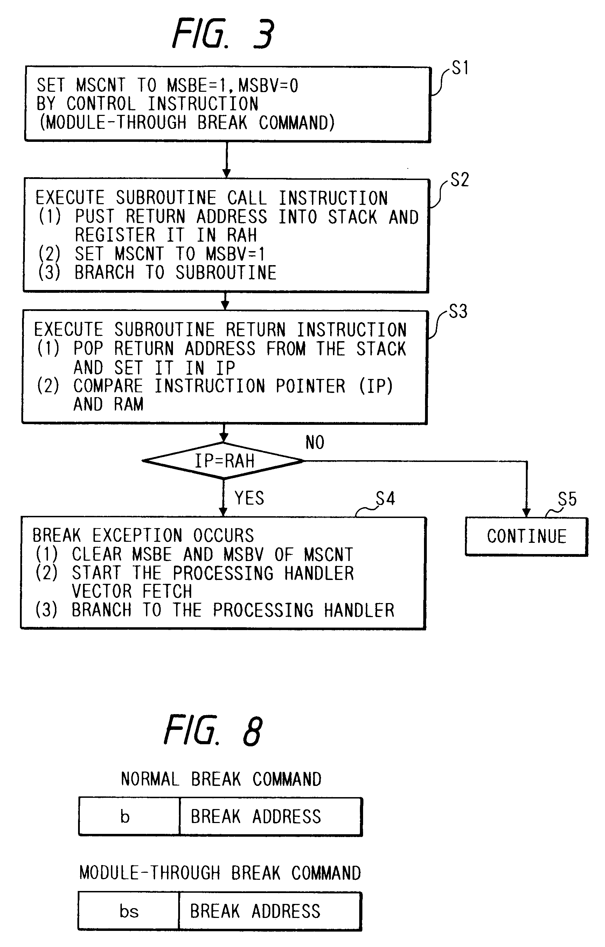

Figure 3 shows an example flow of data processing steps performed in executing the module-through break.

First, the control register manipulation instruction (module-through break command) sets the module-through break enable bit (MSBE) in the module-through break control register (MSCNT) ***61*** to "1" and the module-through break valid bit (MSBV) to "0" (S1). Such settings are specified by the user issuing a module-through break command from the system development apparatus ***300*** to the emulator body ***110***. This command is decoded by the emulator control unit ***111*** and, according to the decoded result, the microprocessor ***1*** executes the control register manipulation instruction. At this time the debug mode is already set.

When the module-through break enable bit (MSBE) is 1, execution of the call instruction (branch instruction) for a module (subroutine) that is to be applied with a module-through break causes a return-from-the-module address, i.e. the modified address from the instruction pointer (IP) ***50*** (hereinafter referred to simply as a return address) to be pushed down into the stack. At this time, since the module-through break valid bit (MSBV) is 0, the return address is registered in the return address hold register (RAH) ***51***. Then, the module-through break valid bit (MSBV) in the module-through break control register (MSCNT) ***61*** is set to 1 to prevent overwriting the return address hold register (RAH) ***51***. After this, the program branches to the module (S2). When the module-through break enable bit (MSBE) is 0, neither the registration into the return address hold register (RAH) ***51*** nor the setting of the module-through break valid bit (MSBV) in the module-through break control register (MSCNT) ***61*** is carried out.

Having executed the instructions in the module and completed the return instruction at the end of the module, the microprocessor ***1*** first pops up the return address from the stack and sets it in the instruction pointer ***50***. When at this time the module-through break valid bit (MSBV) is 1, the microprocessor ***1*** compares the value of the return address hold register (RAH) ***51*** with the value of the instruction pointer ***50*** (S3). When they agree, the occurrence of a module-through break exception is notified through the control line ***15*** to the control unit ***6***, clearing both the module-through break enable bit (MSBE) and the module-through break valid bit (MSBV) in the module-through break control register (MSCNT) ***6*****1**. With the control unit ***6*** thus informed, the bus control circuit ***60*** starts the vector fetch in the exception processing handler, transferring the control to the exception processing handler (S4). This stops the execution by the microprocessor ***1*** of instruction (execution of an instruction corresponding to the return address stored in the return address hold register (RAH) ***5*****1**) , and the internal status of the microprocessor ***1***, i.e. the break state, is output to the emulator control unit ***111***. When the comparison result shows disagreement, the return instruction is normally executed to return the control to the original procedure (S5).

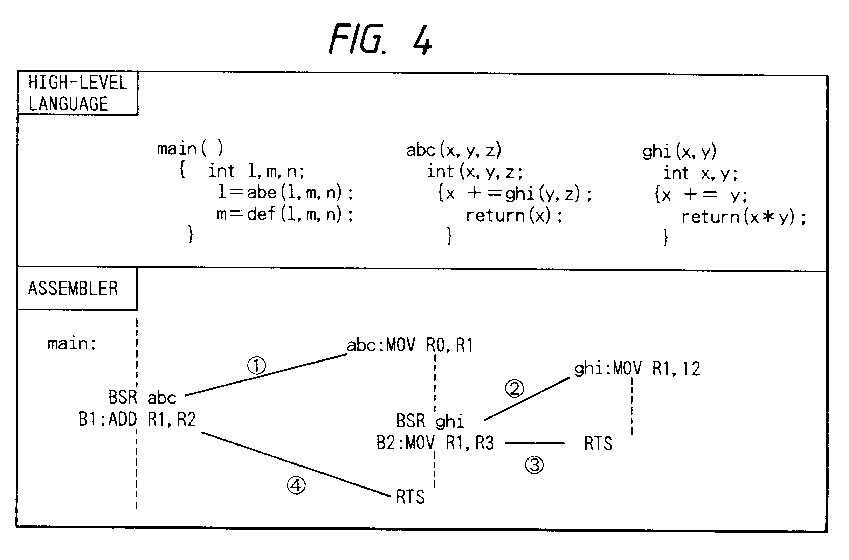

With reference to Figure 4, the actual operation of the module-through break and the necessity of the module-through break valid bit (MSBV) in the module-through break control register (MSCNT) ***61***.

In a high-level language program in which a main() calls an abc() and the abc() calls a ghi(), let us consider a case where the module-through break is applied to the abc(). The module-through break is examined in connection with the operation on the assembler instructions. Immediately before a branch-to-subroutine instruction "BSR abc," the control register manipulation instruction contained in the command from the system development apparatus ***300*** sets the module-through break enable bit (MSBE) in the module-through break control register (MSCNT) ***61*** to 1 and the module-through break valid bit (MSBV) to 0. At the execution of "BSR abc" the return address B1 is pushed into the stack and, since the module-through break valid bid (MSBV) = 0, the return address B1 is registered in the return address hold register (RAH) ***5*****1**. After registration, the module-through break valid bit (MSBV) is set to 1 and the program branches to abc ( ① ). Next, at a time when "BSR ghi" is executed, the module-through break enable bit (MSBE) = 1 but the module-through break valid bit (MSBV) = 1, so that the return address B2 is not registered in the return address hold register (RAH) ***51*** when it is pushed into the stack and the program branches to the ghi ( ② ). At the execution of the return-from-ghi instruction RTS, the module-through break valid bit (MSBV) in the module-through break control register (MSCNT) ***61*** is 1, so that the return address B2 popped up from the stack is compared with the contents B1 of the return address hold register (RAH) ***51***. Since they do not agree, the program returns to the address B2 ( ③ ). At the execution of the return-from-abc instruction RTS, because the module-through break valid bit (MSBV) in the module-through break control register (MSCNT) ***61*** is 1, the return address B1 popped up from the stack is compared with the contents of the return address hold register (RAH) ***51***, the address B1. Since they agree, a module-through break exception is produced ( ④ ). Where a module that is to be given the module-through break has another module nested therein, as shown in this example, it is necessary to prevent the return address hold register (RAH) ***51*** from being updated by a module call instruction. The module-through break valid bit (MSBV) in the module-through break control register (MSCNT) ***61*** has a function of preventing such an unwanted updating of the return address hold register (RAH) ***51***.

Figure 1 shows, as an example of debug support function other than the module-through break, a break point control circuit ***56*** which supports an ordinary break function. The break point control circuit ***56*** is set, by the ordinary break command, with an address at which to break in the debug mode, compares it with the access address being emulated (the address in the instruction pointer (IP)) and notifies the result of comparison to the control unit ***6***, which then starts the vector fetch in the exception processing handler, transferring the control to the exception processing handler and stopping the microprocessor execution of instructions. The internal state of the microprocessor ***1***, i.e. the break state, is output to the emulator control unit ***111***. When the instruction execution address is taken as the break point, the address of an instruction to be executed next to the one being executed is compared with the break point.

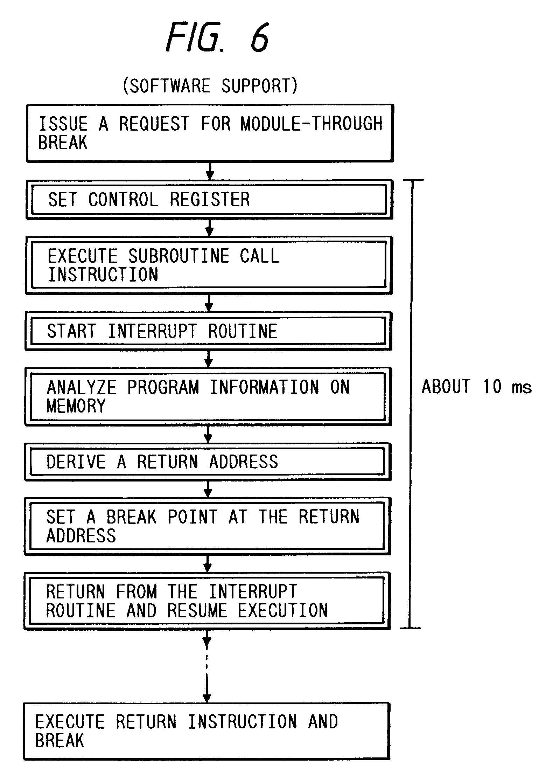

Figure 5 shows the processing steps performed by the emulator when the microprocessor ***1*** supports the module-through break with its own hardware. As shown in the figure and in the earlier description, the module-through break is performed in the following manner. When the system development apparatus issues a module-through break requests or command to the emulator ***100***, the emulator ***100*** needs only to make a setting with the control register to start emulation from the desired subroutine call. This process does not pose any burden for the firmware of the emulator. The processing time for this module-through break support will take as small as about 200 nsec.

Figure 6 shows the processing steps performed by the emulator in realizing the module-through break by a method whereby the emulator software analyzes the stack formed on memory at a time of calling a module to determine the return address at the end of the module and activate a break by taking the return address as a break point. When the system development apparatus ***300*** issues a module-through break demand to the emulator ***100***, the emulator ***100*** in response to the demand makes setting with the control register and starts emulation from the desired subroutine call instruction. According to the setting of the control register, the interrupt routine is started for the emulator firmware to analyze the program information in memory, extract the return-from-the-subroutine-call address or return address, and set the return address as the break point of the break point control circuit. Then after exiting from the interrupt routine, the emulator resumes emulation. When in this way the module-through break is not supported by the hardware of the microprocessor, processing including extraction of the return address from the subroutine call takes a relatively long time as large as about 10 msec, causing a burden to the emulator firmware. This means that emulator development also requires developing a dedicated software for performing such complex processing.

The above embodiment offers the following advantages.
(1) The microprocessor includes the module-through break control register (MSCNT) ***61*** accessible from outside, the return address hold register (RAH) ***51*** for holding the return-from-the-module address or return address, and the comparator circuit ***52*** for comparing the value of the return address hold register (RAH) ***51*** with the return address popped up from the stack at a time of executing a return instruction at the end of the module. When the microprocessor ***1*** is set into the module-through break mode from outside through the module-through break control register (MSCNT) ***61***, the microprocessor ***1*** registers the return address, which is stacked at the execution of a module call instruction, also in the return address hold register (RAH) ***51***, compares the value of the return address hold register (RAH) ***51*** with the return address at a time of executing the return instruction, and, when they agree, produces a module-through break exception. Because of this configuration and processing, the microprocessor ***1*** can apply through its own hardware a break immediately after executing the return instruction at the end of the module.
(2) In this way, the module-through break as the symbolic debug function in high-level language can be realized without embedding debug instructions in the user program or without burdening the emulation software (symbolic debugger firmware). In other words, unlike the method which replaces the first instruction after return from a module with a debug instruction, the method of this invention can realize the module-through break even in a system whose user program is located on a ROM, without performing again the step-by-step execution through the already debugged module. Further, this method eliminates the trouble of developing dedicated analyzing software as the emulator firmware to analyze the stack that the data processor forms on memory at a time of calling a module.
(3) The module-through break control register (MSCNT) ***61*** has, in addition to the module-through break enable bit (MSBE) that specifies the validity of the module-through break mode, the module-through break valid bit (MSBV) that either permits or inhibits the registration of new data into the return address hold register (RAH) ***51***. When new data has been registered in the return address hold register (RAH) ***51***, the module-through break valid bit (MSBV) is inverted to prevent overwriting the return address hold register (RAH) **51**. Hence, even if the module that is to be given a module-through break has another module nested therein, once the return address from the called subroutine is registered in the return address hold register (RAH) ***51***, the return address is held in the return address hold register (RAH) ***51*** until the return-from-the-subroutine instruction is executed. Therefore, where the first module called from the main program calls another module, the module-through break can be realized for the entire first module as one unit.

The invention has been described in detail in conjunction with the above embodiment. It is noted that the invention is not limited to this embodiment and various modifications may be made without departing the spirit of this invention. For example, a special pointer may be provided which always indicates the address of an instruction next to the one being executed. The setting of the debug mode and the module-through break mode for the microprocessor is not limited to the setting by register but it is possible to set these modes by a mode signal from external terminal. Further, the microprocessors and microcomputers, examples of the data processor, are not limited to those that perform instruction prefetch or execute instructions in pipeline. This invention can be applied also to evaluation-dedicated data processors used for, say, emulation.

Although the present invention has been described mainly in the case of an emulator including the symbolic debugger, the field from which the invention has originated, the application of this invention is not limited to it but includes other debugging apparatuses. This invention is widely applicable to at least the conditions where a break is activated for each module as one unit without performing step-by-step execution through the module such as subroutine.

Representative advantages offered by this invention may be briefly summarized as follows.
(1) The data processor of this invention that supports the module-through break can activate a break through its own hardware immediately after executing the return instruction at the end of the called module.
(2) Hence, the module-through break as the symbolic debug function in high-level language can be realized without embedding debug instructions in the user program or without burdening the emulation software (symbolic debugger firmware).
(3) Unlike a method which replaces the first instruction after return from a module with a debug instruction, this invention, because of the feature (1), can realize the module-through break even in a system whose user program is located on a ROM without performing again the step-by-step execution through the already debugged module. Further, this invention eliminates the trouble of developing dedicated analyzing software as the emulator firmware to analyze the stack that the data processor forms on memory at a time of calling a module.
(4) Since the module-through break valid bit (MSBV) is provided which permits or inhibits the registration of new data in the return address hold register (RAH), once the return address from the called subroutine is registered in the return address hold register (RAH), the return address is kept there until the return-from-the-subroutine instruction is executed. Therefore, where the module called by the main program calls another module, the module-through break can be realized for the entire first-called module treated as one unit.

## Claims

1. A microprocessor comprising:
a micro-instruction storage means (53) for storing micro-instructions and outputting the micro-instruction corresponding to a macro-instruction supplied from outside;
data processing means (7, 8) for performing specified data processing according to the micro-instruction output from the micro-instruction storage means;
mode discrimination means (62) having a bit to specify whether a debug mode is enabled or disabled;
return address storage means (51) for storing a return address, the return address representing an address in the main program to which the processing returns from a subroutine called by a branch instruction of the main program after executing the subroutine; and
indicating means (61) having a bit to specify whether or not the return address storage means (51) is allowed to be written with the return address;
wherein when a debug command is supplied from outside, the mode discrimination means (62) is set with a bit representing the debug mode and the indicating means (61) is set with a bit indicating that the return address storage means (51) is enabled to be written with the return address, and once the indicating means (61) is set with the return address write enable bit and the return address is written into the return address storage means, the indicating means (61) is set with a bit indicating that the writing into the return address storage means (51) is inhibited.

2. An emulation system comprising:
a system development apparatus (300) for outputting commands;
an emulator (100) incorporating a microprocessor (1) for performing emulation according to the commands supplied from the system development apparatus (300); and
a target system (200) connected to the emulator (100) and including a macro-instruction storage means (204) to store macro-instructions to be executed by the microprocessor (1);
the microprocessor (1) comprising:
micro-instruction storage means (53) to store micro-instructions and output a micro-instruction corresponding to the macro-instruction supplied from the macro instruction storage means (204);
data processing means (7, 8) to perform specified data processing according to the micro-instruction output from the micro-instruction storage means (53);
mode discrimination means (62) having a bit to indicate whether or not a debug mode is enabled;
return address storage means (51) to store a return address after executing a subroutine called by a branch instruction in a program, the return address representing an address in the program to which the processing returns from the subroutine; and
indicating means (61) having a bit to indicate whether or not the return address can be written into the return address storage means (51);
wherein when a debug command is supplied from the system development apparatus (300), the mode discrimination means (62) is set with a bit representing the debug mode and the indicating means (61) is set with a bit indicating that the return address storage means (51) is enabled to be written with the return address, and once the indicating means (61) is set with the return address write enable bit and the return address is written into the return address storage means (51), the indicating means (61) is set with a bit indicating that the writing into the return address storage means (51) is inhibited.

3. The microprocessor according to claim 1 or emulation system according to claim 2, further comprising: an instruction pointer (50) for storing an address of a
macro-instruction being executed; and
comparator means (52) for comparing the address in the instruction pointer with the return address in the return address storage means.

4. The microprocessor or emulation system according to claim 3, further comprising
control means (6) which, when the comparator means (52) indicates agreement, clears the bits of the mode discrimination means (62) and the indicating means (61), stops the execution of the instruction corresponding to the return address stored in the return address storage means (51), and outputs the internal state of the microprocessor.

5. The microprocessor or emulation system according to claim 4, wherein the instruction the execution of which is stopped is a macro-instruction.

6. The microprocessor or emulating system according to claim 4 or 5, wherein the return address storage means (51) is a register.

7. The microprocessor or emulation system according to claim 6, wherein the indicating means (61) and the mode discrimination means (62) are registers different from the return address storage means (51).

8. The microprocessor or emulation system according to claim 7, further comprising:
debug address storage means (56) to store an address of a macro-instruction to be executed next to an arbitrary instruction so as to stop the execution of the next macro-instruction.

9. The microprocessor or emulation system according to claim 8, wherein the debug address storage means (56) compares the address of the macro-instruction to be executed next with the address of the macro-instruction in the instruction pointer (50) currently being executed and, when they agree, supplies an agreement signal to the control means (6).

10. The microprocessor or emulation system according to claim 9, wherein when the control means (6) receives the agreement signal from the debug address storage means (56), the control means (6) stops the execution of the macro-instruction corresponding to the address in the debug address storage means (56) and outputs the internal state of the microprocessor.

11. The microprocessor according to claim 10, wherein the addresses to be stored in the return address storage means (51) and the debug address storage means (56) are determined by commands supplied from outside.

12. The emulation system according to claim 10, wherein the addresses to be stored in the return address storage means (51) and the debug address storage means (56) are determined by commands supplied from the system development apparatus (300).

13. In an emulation system comprising;
a system development apparatus (300);
an emulator (100) incorporating a microprocessor (1) for performing emulation; and
a target system (200) connected to the emulator (100) and including a macro-instruction storage means (204) to store macro-instructions to be executed by the microprocessor (1);
a debug operation performed by the emulation system comprising the steps of:
outputting a debug command from the system development apparatus (300);
in response to the debug command, setting a bit representing a debug mode in a mode discrimination means (62) of the microprocessor;
in response to the debug command, setting an indicating means (61) of the microprocessor with a bit which indicates that the return address storage means (51) in the microprocessor is enabled to be written with a return address;
while the indicating means (61) is set with the return address write enable bit, writing the return address into the return address storage means (51), the return address representing an address in the main program to which the processing returns from a subroutine called by a branch instruction of the main program after executing the subroutine;
after the return address storage means (51) has been written with the return address, setting the indicating means (61) with a bit which indicates that the writing into the return address storage means (51) is inhibited;
comparing the address of the macro-instruction in the insurrection pointer (50) of the microprocessor currently being executed with the return address in the return address storage means (51); and
when the comparison result shows agreement, clearing the bits of the mode discrimination means (62) and the indicating means (61), stopping the execution of the macro-instruction corresponding to the return address in the return address storage means (51), and outputting the internal state of the microprocessor.
